# EUROPEAN PATENT SPECIFICATION

(11) **EP 1 830 970 B1**
(45) Date of publication and mention of the grant of the patent: **20.10.2010**
(21) Application number: 05855072.4
(22) Date of filing: 22.12.2005
(51) Int. Cl.: B05D 5/00

(54) **METHOD OF APPLYING AUTOMOTIVE PRIMER-SURFACER USING A SQUEEGEE**
VERFAHREN ZUM AUFTRAGEN VON FAHRZEUGFÜLLER MITHILFE EINES SPACHTELS
PROCEDE PERMETTANT D'APPLIQUER UN APPRET D'IMPRESSION A L'AIDE D'UNE RACLETTE

(30) Priority: 29.12.2004 US 640202 P
(43) Date of publication of application: 12.09.2007
(73) Proprietor: The Sherwin-Williams Company, Cleveland, OH 44115 (US)
(72) Inventor: GILLINGHAM, James, Boise, Idaho 83709 (US); TANG, Weilin, Solon, OH 44139 (US); GERCKEN, Chris, Middlefield, OH 44062 (US); HARRELSON, Mark G., North Ridgeville, OH 44039 (US); MODRZYNSKI, Kristopher M., Reminderville, Ohio 44202 (US); McCORD, David A., Medina, OH 44256 (US); STAUNTON, Thomas J., Euclid, OH 44123 (US); BAZIL, Kurt D., Akron, OH 44333 (US)
(74) Representative: Gritschneder, Martin
(86) International application number: PCT/US2005/046449
(87) International publication number: WO 2006/071695

(56) References cited:
- WO-A-92/01519
- WO-A-95/09208
- US-A1- 2004 234 698
- US-B1- 6 375 377
- US-B1- 6 686 412

## Description

The present invention is directed to a method for refinishing a damaged area of a substrat.

As used herein, "automotive refinish" refers to compositions and processes used in the repair of a damaged automotive finish, usually, but not always, an OEM provided finish. Refinish operations may involve the repair of one or more outer coating layers, the repair or replacement of entire automotive body components, or a combination of both. The terms "refinish coating" or "repair coating" may be used interchangeably. The refinish process generally involves sanding the surface to be refinished, applying several coats of a primer composition, applying a pigmented basecoat to achieve the desired appearance (color, gloss and distinctiveness of image(DOI)), and optionally applying a clearcoat composition. As used herein, "topcoat" refers to any protective or decorative coating applied over a primer coating layer in a refinish operation, including but not limited to pigmented basecoats, clearcoats, and other primers.

During the automotive refinish process, bare metal and plastic substrates are often exposed as a result of the removal of the previously applied coating layers containing and/or surrounding the defect area. However, it is often difficult to obtain adequate adhesion of refinish coatings applied directly to exposed bare substrates. Among the many factors influencing the degree of refinish substrate/coating adhesion are the type of exposed substrate, the presence or absence of adhesion promoting pretreatments and/or primers, the size of the exposed area to be repaired, and whether previously applied "anchoring" coating layers surround the exposed repair area. Adhesion to bare metal substrates is improved when the defect area to be repaired is relatively small and is surrounded by previously applied coating layers. Such previously applied coating layers act as an "adhesion anchor" to the refinish coating.

Primer and primer-surfacer compositions are known particularly in the automotive industry and are applied over metal and/or plastic substrates in order to provide intercoat adhesion between the surface of the substrate and the decorative/protective topcoat. Primer-surfacers also perform an additional function of filling minor flaws in the surface of the substrate which, upon sanding of the primer-surfacer, renders a smooth surface for application of a topcoat Such primer-surfacers usually require a number of coats in order to attain the desired thickness of coating to cover minor surface imperfections and allow for sanding which also enhances topcoat adhesion. As used herein the term "primer" includes primers and primer-surfacers.

Typical automotive refinishing processes require that primers be applied by spraying or rolling the primer onto the repaired region. Spray application of primers has several drawbacks. For example, spray application of primers can be labor intensive and time consuming. Un-repaired parts of the vehicle must be masked to protect them from any over-spray. Also, spray application of primers must be done in a paint spray booth. Thus, labor time is added to the whole refinishing process, because several coats of primer must be spray applied in a spray booth, allowed to cure, sanded and cleaned before the actually painting process begins. This takes up valuable time in the spray booth that could be used to finish other vehicles. In addition, spray application of primers usually involves significant waste of primer material. In order to use most conventional spray equipment, a painter must usually mix more primer than is actually needed for a particular job. In the case of two component reactive primers, once the two components are mixed and begin to react, any material not used within the "pot life" of the primer must be discarded. Moreover, for refinishing minor scratches or nicks, usually a larger area than necessary must be spray coated with primer. Such unnecessary coating of undamaged areas of the vehicle causes additional waste of materials and time. In addition, spray coatings are subject to strict requirements with regard to the volatile organic content of the coatings. Such a process is known from US-A-6 686 412 which is considered the closest prior art.

Roller application of primers has several problems as well. Primers applied by roller applicators tend to have inconsistent film builds, and there may be bridging of sand scratches with the primer because the roller does not force the primer composition into the scratch areas. In addition, mapping the edges of the primed area can be difficult with roller applications because it is difficult to taper the edges of the primer application with a roller and the primed area sometimes telegraphs through the final finish.

In the accompanying drawings and description that follow, like parts are indicated throughout the drawings and description with the same reference numerals, respectively. The figures are not drawn to scale and the proportions of certain parts have been exaggerated for convenience of illustration.

FIG. 1 illustrates a two-component cartridge, static mixer and applicator gun used in connection with the present invention;
FIG. 2A illustrates one embodiment of a two-component cartridge;
FIG. 2B illustrates a second embodiment of a two-component cartridge; and
FIG. 2C illustrates a third embodiment of a two-component cartridge.

The present invention provides a method for repairing an existing finish on a substrate. In one useful embodiment, the method as provided herein is used to repair a vehicle finish, however, the method disclosed herein may be applied to many alternative substrates. The method uses a squeegee applicator to apply a primer composition. As will become apparent from the description herein, use of a squeegee allows small repairs to be accomplished more economically and quickly. In one useful embodiment, the primer composition used is low VOC and has a relatively high solids content.

In general, the method may comprise preparing a damaged area for refinishing; providing a multi-component coating composition wherein the components are reactive upon mixing, said coating comprising (i) a first component comprising a film forming polymer having at least one functional group, and (ii) a second component comprising a crosslinker, wherein said crosslinker comprises at least one functional group reactive with the at least one functional group of the film forming polymer in a crosslinking reaction; mixing the first component and the second component of the multi-component coating composition; and spreading the mixed multi-component coating composition onto the prepared damaged area using a squeegee applicator to form a coating layer on the substrate. The method may also include after-processing of the coating layer, including but not limited to curing, further sanding and/or cleaning, and applying subsequent coating layers.

The refinish method of the present invention may also include preparing the damaged substrate surface for priming and coating, preparing the primer composition, spreading the primer composition to the substrate using a squeegee applicator, allowing the primer to cure, preparing the primed substrate for subsequent coatings and then applying subsequent coating layers over the primer surface.

Substrates for repair typically include metal and plastic substrates. However, the substrate may include wood, glass, synthetic fibers, etc. When used in an automotive refinish application, the substrate to be primed usually includes an existing paint finish at and surrounding the damaged area.

The initial step of preparing the substrate surface for priming first involves repairing the substrate body, such as removal of dents. Repair of the substrate body depends on the degree of damage. For some damages, repairs may be made using a body filler or body putty. Body fillers typically consist of a paste-like mixture of a polyester resin. Body fillers usually include a peroxide initiator, which allows it to cure. For damages such as pinholes, key-scratches, nicks, stone-chips etc., only refinish repairs may be needed or a combination of the application of body filler and refinishing may be used.

After the appropriate repairs are made, if any, the substrate is optionally cleaned. Cleaning may be accomplished by washing using known detergents and water, or by cleaning the surface with solvents. Both washing and solvent cleaning may be used on the substrate depending on the degree of cleaning needed. The cleaning may be done using equipment such as a power washer or using a cloth, sponge, or similar cleaning implement. The cleaned surface may then be dried by wiping with a dry cloth, by air drying, or by forced air drying.

After the substrate is cleaned, the damaged area may be sanded. In one embodiment, the repair area is sanded and featheredged, wherein the thickness of the edge of the existing finish is reduced to accommodate the new finish, such as by using a random orbital sander and sandpaper such as 80, 180, 280 and/or 320 grit sandpaper. Other sandpaper types may be used so long as the appropriate level of sanding and featheredging is achieved. After the initial sanding, the sanded area may be extended slightly into the existing finish using a finer grit sandpaper, such as 400 grit sandpaper to best accommodate the new primer application.

After sanding, the area to be refinished may optionally be cleaned again to remove any excess dust generated during the sanding operation or any other dirt or contaminants, which have come in contact with the surface during the process thus far. In one useful embodiment, the repair area is cleaned after sanding with a solvent cleaner and dried with a cloth. After cleaning, the repaired area is ready for the application of primer.

The methods of the present invention utilize multi-component primer coating compositions as the squeegee applied primers. As used herein, the term "multi-component" refers to the number of reactive components (e.g. in solutions or dispersions), which are mixed together and react with each other in a crosslinking reaction to provide a curable coating composition. Up until the point of mixing, none of the individual components alone provides a curable coating composition. In one useful embodiment, a two-component primer coating composition is utilized in the method of the present invention.

Once mixed, the resulting curable primer coating composition is applied to a substrate as quickly as possible. Typically, "as quickly as possible" means immediately after the mixing of the separate components or within eight (8) hours from the time the separate components are mixed, and in one useful embodiment, less than one (1) hour after mixing.

Unlike most one-component compositions, multi-component coating compositions will generally cure in the absence of elevated temperatures. The individual components will react with each other upon admixture to provide a cross-linked product, most often at ambient temperatures.

Two-component coating compositions typically comprise (i) a film-forming component that in turn comprises a film-forming polymer or binder and (ii) a crosslinking agent. The film-forming polymer is typically in a polymer or binder component while the crosslinking agent is typically in a hardener component.

Coating compositions of the invention may comprise any of the thermosetting film-forming components used in the refinish coatings industry. Such coatings may rely on film formation via chemical crosslinking, a combination of thermosetting films produced by chemical crosslinking, or in some cases may rely in part on a lacquer-like air dry. In one useful embodiment, the primer compositions used in accordance with the present invention do not utilize free radical or peroxide initiated cure mechanisms. The coating compositions are also generally desired to cure at ambient temperatures.

Coatings used in connection with the present invention generally comprise at least two components (1) at least one film-forming polymer and (2) at least one crosslinking agent. A film-forming polymer will comprise one or more functional groups reactive with one or more functional groups on a crosslinking agent. Examples of functional group combinations useful for the production of crosslinked coatings include, but are not limited to active-hydrogen and isocyanate, epoxide and carboxylic acid, hydroxyl and carboxylic acid, epoxide and amine, imine and isocyanate, epoxide and imine, acetoacetoxy functional polymers and amine or imine, hydroxyl or epoxide and anhydride, and the like. In addition, Michael addition polymerization between acrylates and amines, or acetoacetoxy functional polymers and acrylates, polyketimines or polyaldimines may also be used to form coatings for use in the present invention. A brief description of the various functional groups with examples thereof is included below.

1. Active-Hydrogen Compounds.

Active hydrogen functionality means those reactive groups as determined by the Zerewitinoff Method and include -OH, -COOH, -SH, and -NH. Examples of compounds containing active hydrogen functionality include hydroxy-functional materials (e.g. polyols), amine-functional materials (e.g. polyamines), and acid-functional materials (e.g. carboxylic acid). Some examples will be discussed in more detail herein.

2. Hydroxy-Functional Compounds.

The hydroxy-functional compounds which are useful in the practice of this invention have an average of at least two hydroxyl groups per molecule. Polymeric hydroxy-functional compounds such as polyethers, polyesters, acrylics, polyurethanes, polycaprolactones, etc. are useful as film forming polymers. Low molecular weight diols and polyols such as propylene glycol, 1,6-hexanediol triethanol amine, and pentaerythritol may be utilized, typically as reactive diluents, in primers in connection with the present invention.

In one useful embodiment, a hydroxy-functional polymer may be used to prepare a primer for use in the present invention. Such a polymer may have a number average molecular weight of at least about 400. Typical number average molecular weights for such suitable hydroxy-functional polymers range from about 400 to about 30,000, for example about 500 to about 7,000. Typically faster rates of reaction during cure are achieved by utilizing hydroxy-functional compounds having predominantly primary hydroxyl functionality. In one embodiment, a hydroxy-functional compound having all primary hydroxyl functionality may be used.

Representative hydroxy-functional polymers include those described in Sections 2.1 through 2.5 below:

2.1. Polyether polyols are well known in the art and are conveniently prepared by the reaction of a diol or polyol with the corresponding alkylene oxide. These materials are commercially available and may be prepared by known process such as, for example, the processes described in Encyclopedia of Chemical Technology, Volume 7, pages 257-262, published by Interscience Publishers, Inc., 1951. Representative examples include the polypropylene ether glycols and polyethylene ether glycols such as those marketed as Niax®. Polyols from Dow Chemical.

2.2. Another useful class of hydroxy-functional polymers are those prepared by condensation polymerization reaction techniques as are well known in the art. Representative condensation polymerization reactions include polyesters prepared by the condensation of polyhydric alcohols and polycarboxylic acids or anhydrides, with or without the inclusion of drying oil, semi-drying oil, or non-drying oil fatty acids. By adjusting the stoichiometry of the alcohols and the acids while maintaining an excess of hydroxyl groups, hydroxy-functional polyesters can be readily produced to provide a wide range of desired molecular weights and performance characteristics.

The polyester polyols are derived from one or more aromatic and/or aliphatic polycarboxylic acids, the anhydrides thereof, and one or more aliphatic and/or aromatic polyols. The carboxylic acids include the saturated and unsaturated polycarboxylic acids and the derivatives thereof, such as maleic acid, fumaric acid, succinic acid, adipic acid, azelaic acid, and dicyclopentadiene dicarboxylic acid. The carboxylic acids also include the aromatic polycarboxylic acids, such as phthalic acid, isophthalic acid, terephthalic acid, etc. Anhydrides such as maleic anhydride, phthalic anhydride, trimellitic anhydride,
or Nadic Methyl Anhydride (brand name for methylbicyclo[2.2.]heptene-2,3-dicarboxylic anhydride isomers) can also be used.

Representative saturated and unsaturated polyols which can be reacted in stoichiometric excess with the carboxylic acids to produce hydroxy-functional polyesters include diols such as ethylene glycol, dipropylene glycol, 2,2,4-trimethyl 1,3-pentanediol, neopentyl glycol, 1,2-propanediol, 1,4-butanediol, 1,3-butanediol , 2,3-butanediol, 1,5-pentanediol, 1,6-hexanediol, 2,2-dimethyl-1,3-propanediol, 1,4-cyclohexanedimethanol, 1,2-cyclohexanedimethanol, 1,3-cyclohexanedimethanol, 1,4-bis(2-hydroxyethoxy)cyclohexane, trimethylene glycol, tetramethylene glycol, pentamethylene glycol, hexamethylene glycol, decamethylene glycol, diethylene glycol, triethylene glycol, tetraethylene glycol, norbomylene glycol, 1,4-benzenedimethanol, 1,4-benzenediethanol, 2,4-dimethyl-2-ethylenehexane-1,3-diol, 2-butene-1,4-diol, and polyols such as trimethylolethane, trimethylolpropane, trimethylolhexane, triethylolpropane, 1,2,4-butanetriol, glycerol, pentaerythritol, dipentaerythritol, etc.

Typically, the reaction between the polyols and the polycarboxylic acids is conducted at about 120°C to about 200°C in the presence of an esterification catalyst such as dibutyl tin oxide.

2.3. Additionally, hydroxy-functional polymers can be prepared by the ring opening reaction of epoxides and/or polyepoxides with primary or, preferably, secondary amines or polyamines to produce hydroxy-functional polymers. Representative amines and polyamines include ethanol amine, N-methylethanol amine, dimethyl amine, ethylene diamine, isophorone diamine, etc. Representative polyepoxides include those prepared by condensing a polyhydric alcohol or polyhydric phenol with an epihalohydrin, such as epichlorohydrin, usually under alkaline conditions. Some of these condensation products are available commercially under the designations EPON from Hexion Specialty Chemicals or DRH from Shell Chemical Company, and methods of preparation are representatively taught in U.S. Pat. Nos. 2,592,560; 2,582,985 and 2,694,694.

2.4. Other useful hydroxy-functional polymers can be prepared by the reaction of at least one polyol, such as those representatively described in Section 2.2 above, with polyisocyanates to produce hydroxy-functional urethanes. Representative polyisocyanates having two or more isocyanate groups per molecule include the aliphatic compounds such as ethylene, trimethylene, tetramethylene, pentamethylene, hexamethylene, 1,2-propylene, 1,2-butylene, 2,3-butylene, 1,3-butylene, ethylidene and butylidene diisocyanates; the cycloalkylene compounds such as 3-isocyanatomethyl-3,5,5-trimethylcyclohexylisocyanate, and the 1,3-cyclopentane, 1,3-cyclohexane, and 1,2-cyclohexane diisocyanates; the aromatic compounds such as m-phenylene, p-phenylene, 4,4'-diphenyl, 1,5-naphthalene and 1,4-naphthalene diisocyanates; the aliphatic-aromatic compounds such as 4,4'-diphenylene methane, 2,4- or 2,6-toluene, or mixtures thereof, 4,4'-toluidine, and 1,4-xylylene diisocyanates; the nuclear substituted aromatic compounds such as dianisidine diisocyanate, 4,4'-diphenylether diisocyanate and chlorodiphenylene diisocyanate; the triisocyanates such as triphenyl methane-4,4',4"-triisocyanate, 1,3,5-triisocyanate benzene and 2,4,6-triisocyanate toluene; and the tetraisocyanates such as 4,4'-diphenyl-dimethyl methane-2,2'-5,5'-tetraisocyanate; the polymerized polyisocyanates such as tolylene diisocyanate dimers and trimers, and other various polyisocyanates containing biuret, urethane, and/or allophanate linkages. The polyisocyanates and the polyols are typically reacted at temperatures of about 25°C to about 150°C to form the hydroxy-functional polymers.

2.5. Useful hydroxy-functional polymers can also be conveniently prepared by free radical polymerization techniques such as in the production of acrylic resins. The polymers are typically prepared by the addition polymerization of one or more monomers. At least one of the monomers will contain, or can be reacted to produce, a reactive hydroxyl group. Representative hydroxy functional monomers include 2-hydroxyethyl acrylate, 2-hydroxypropyl acrylate, 4-hydroxybutyl methacrylate, 2-hydroxypropyl methacrylate, 3-hydroxybutyl acrylate, 4-hydroxypentyl acrylate, 2-hydroxyethyl ethacrylate, 3-hydroxybutyl methacrylate, 2-hydroxyethyl chloroacrylate, diethylene glycol methacrylate, tetraethylene glycol acrylate, para-vinyl benzyl alcohol, etc. Typically the hydroxy-functional monomers would be copolymerized with one or more monomers having ethylenic unsaturation such as:
(i) esters of acrylic, methacrylic, crotonic, tiglic, or other unsaturated acids such as: methyl acrylate, ethyl acrylate, propyl acrylate, isopropyl acrylate, butyl acrylate, isobutyl acrylate, ethylhexyl acrylate, amyl acrylate, 3,5,5-trimethylhexyl acrylate, methyl methacrylate, ethyl methacrylate, propyl methacrylate, isobornyl methacrylate, dimethylaminoethyl methacrylate, ethyl tiglate, methyl crotonate, ethyl crotonate, etc.;
(ii) vinyl compounds such as vinyl acetate, vinyl propionate, vinyl butyrate, vinyl isobutyrate, vinyl benzoate, vinyl m-chlorobenzoate, vinyl p-methoxybenzoate, vinyl alpha-chloroacetate, vinyl toluene, vinyl chloride, etc.;
(iii) styrene-based materials such as styrene, alpha-methyl styrene, alpha-ethyl styrene, alpha-bromo styrene, 2,6-dichlorostyrene, etc.;
(iv) allyl compounds such as allyl chloride, allyl acetate, allyl benzoate, allyl methacrylate, etc.;
(v) other copolymerizable unsaturated monomers such as acrylonitrile, methacrylonitrile, dimethyl maleate, isopropenyl acetate, isopropenyl isobutyrate, acrylamide, methacrylamide, and dienes such as 1,3-butadiene, etc.

The polymers are conveniently prepared by conventional free radical addition polymerization techniques. Frequently, the polymerization will be initialized by conventional initiators known in the art to generate a free radical such as azobis(isobutyronitrile), cumene hydroperoxide, t-butyl perbenzoate, etc. Typically, the acrylic monomers are heated in the presence of the initiator at temperatures ranging from about 35°C to about 200°C., and especially about 75°C to about 150°C, to effect the polymerization. The molecular weight of the polymer can be controlled, if desired, by the monomer selection, reaction temperature and time, and/or the use of chain transfer agents as is well known in the art.

3. Acetoacetoxy Functional Compounds.

Acetoacetoxy functional acrylic polymers useful for primers in the process of this invention are those having at least one pendant acetoacetoxy group per molecule. In one useful embodiment, the acetoacetoxy functional acrylic primers include at least two pendant acetoacetoxy groups per molecule. Such polymers can be conveniently prepared by addition polymerization of one or more unsaturated monomers. One practical approach to preparing these polymers involves the polymerization of acetoacetate functional unsaturated monomers, typically along with one or more other unsaturated copolymerizable monomers. One especially preferred acetoacetate functional monomer due to its reactivity and commercial availability, is acetoacetoxyethylmethacrylate. Other unsaturated monomers that are useful for introducing acetoacetate functional groups include acetoacetoxyethylmethacrylate, acetoacetoxy propylmethacrylate, allylacetoacetate, acetoacetoxybutylmethacrylate, 2,3-di(acetoacetoxy)propyhnethacrylate, etc. In general, it is practical to convert polymerizable hydroxy functional monomers into acetoacetates by direct reaction with diketene or other suitable acetoacetyl converting agent. See, for example, Journal of Coating Technology, vol. 62, p. 101 (1990) "Comparison of Methods for the Preparation of the Acetoacetylated Coating Resins".

Alternatively, a hydroxy-functional polymer can be prepared by the free radical polymerization of hydroxy-functional unsaturated monomers and the resultant hydroxy-functional polymer can be converted to acetoacetoxy functional groups by direct reaction with diketene, by transesterification with suitable alkyl acetoacetates such as t-butylacetoacetate, or with the thermal reaction of 2,2,6-trimethyl-4H-1,3-dioxin-4-one.

The acetoacetoxy functional monomer will be present at a level of at least one percent by weight of the entire monomer mixture for the acrylic polymer, and typically will comprise from 10 to about 75%, and preferably 25 to about 50% of the entire monomer mixture. Typically the acetoacetoxy functional monomers would be copolymerized with one or more monomers having ethylenic unsaturation such as those listed in Section 2.5.

4. Epoxy-Functional Compounds.

The primer compositions used in the present invention may also incorporate at least one epoxy-functional compound. The epoxy compounds can, if there are sufficient other reactive materials to provide crosslinking, be monoepoxies or a polyepoxide having an average of at least two epoxy groups per molecule.

Representative useful monoepoxides include the monoglycidyl ethers of aliphatic or aromatic alcohols such as butyl glycidyl ether, octyl glycidyl ether, nonyl glycidyl ether, decyl glycidyl ether, dodecyl glycidyl ether, p-tert-butylphenyl glycidyl ether, and o-cresyl glycidyl ether. Monoepoxy esters such as the glycidyl ester of versatic acid (commercially available as CARDURA® E from Hexion Specialty Chemicals), or the glycidyl esters of other acids such as tertiary-nonanoic acid, tertiary-decanoic acid, tertiary-undecanoic acid, etc. are also useful. Similarly, if desired, unsaturated monoepoxy esters such as glycidyl acrylate, glycidyl methacrylate or glycidyl laurate could be used. Additionally, monoepoxidized oils can also be used.

Other useful monoepoxies include styrene oxide, cyclohexene oxide, 1,2-butene oxide, 2,3-butene oxide, 1,2-pentene oxide, 1,2-heptene oxide, 1,2-octene oxide, 1,2-nonene oxide, 1,2-decene oxide, and the like. If a monoepoxide is used, it is desireable that the monoepoxide compound have a sufficiently low volatility to remain in the coating composition under the applicable conditions of cure.

Polyepoxides are useful in primers for use in this invention as well. One useful embodiment would include a poly-functional epoxy compound such as a polyepoxy-functional cycloaliphatic epoxy, due to their reactivity and durability. In one embodiment, such cycloaliphatic epoxies have a number average molecular weight less than about 2,000 to minimize the viscosity. The cycloaliphatic epoxies are conveniently prepared by methods well known in the art such as epoxidation of dienes or polyenes, or the epoxidation of unsaturated esters by reaction with a peracid such as peracetic and/or performic acid.

Other polyepoxides potentially useful in the practices of this invention include aliphatic and aromatic polyepoxies, such as those prepared by the reaction of an aliphatic polyol or polyhydric phenol and an epihalohydrin. Other useful epoxies include epoxidized oils and epoxy-functional copolymers such as acrylic polymers derived from ethylenically unsaturated epoxy-functional monomers such as glycidyl acrylate or glycidyl methacrylate in combination with other copolymerizable monomers such as those listed in section 2.5 above.

5. Imine Compounds.

The imine compounds which are useful in the present invention may be generally represented by the formula: 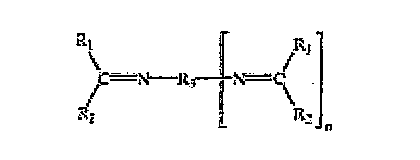 In one embodiment, n may be 1 to about 30; R₁ and R₂ are hydrogen, an alkyl, aryl, cycloaliphatic, or substituted alkyl, aryl, or cycloaliphatic group; and R₁ and R₂ may be the same or different; and R₃ is an aliphatic, aromatic, arylaliphatic or cycloaliphatic group which may also contain heteroatoms such as O, N, S, or Si.

These imine compounds are typically prepared by the reaction of certain carbonyl compounds such as aldehydes and ketones with amines. Representative carbonyl compounds which may be used to form the imine include ketones such as acetone, methyl ethyl ketone, methyl isopropyl ketone, methyl isobutyl ketone, diethyl ketone, benzyl methylketone, diisopropyl ketone, cyclopentanone, and cyclohexanone, and aldehydes such as acetaldehyde, formaldehyde, propionaldehyde, isobutyraldehyde, n-butyraldehyde, heptaldehyde and cyclohexyl aldehydes. Representative amines which may be used to form the imine include ethylene diamine, ethylene triamine, propylene diamine, tetramethylene diamine, 1,6-hexamethylene diamine, bis(6-aminohexyl)ether, tricyclodecane diamine, N,N'-dimethyldiethyltriamine, cyclohexyl-1,2,4-triamine, cyclohexyl-1,2,4,5-tetraamine, 3,4,5-triaminopyran, 3,4-diaminofuran, and cycloaliphatic diamines such as those having the following structures:

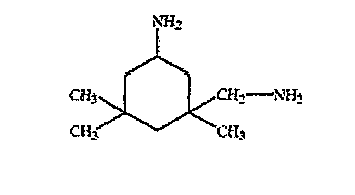

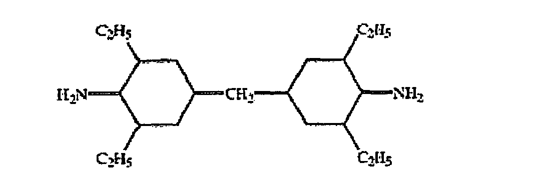

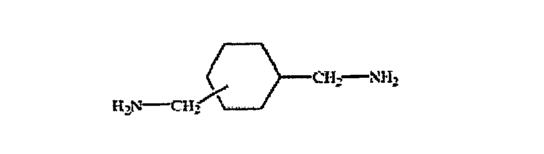

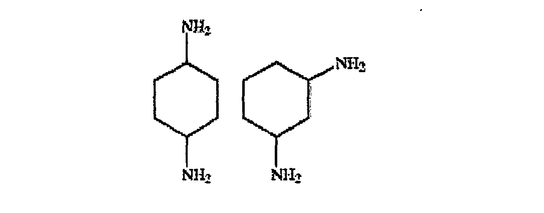

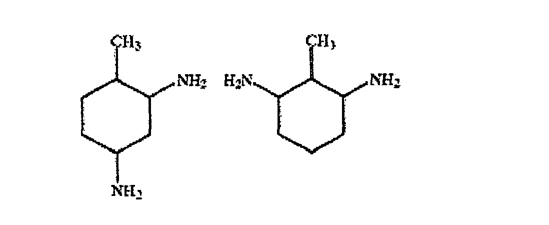

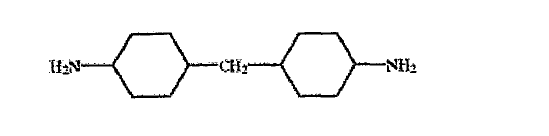

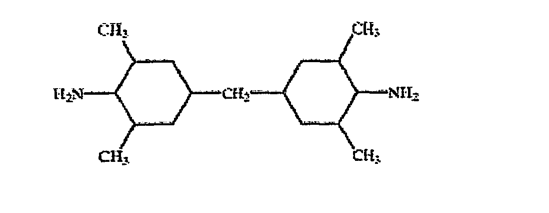

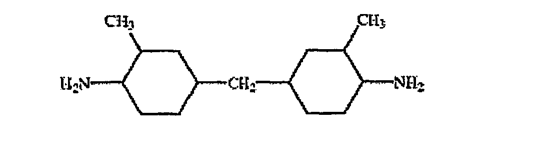

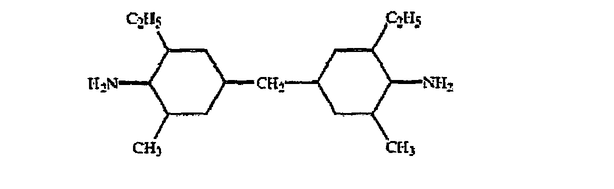

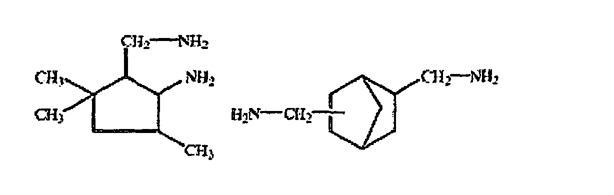

The imines are conveniently prepared by reacting a stoichiometric excess of the ketone or aldehyde with the polyamine in an azeotropic solvent and removing water as it is formed. In order to minimize side reactions, and to avoid delays due to prolonged processing, it is frequently desirable to avoid the prolonged heating necessary to remove all of the excess ketone or aldehyde and unreacted starting materials, provided that their presence does not adversely affect the performance of the final product.

One preferred type of imine compound for reaction with acetoacetoxy functional materials in the practice of this invention is an adduct obtained by reacting an imine having an additional reactive group other than an imine, such as a hydroxyl group or, preferably, an amine group with a compound, such as an isocyanate, or an epoxide, having one or more chemical groups or sites capable of reaction with the additional reactive group. For example, an imine obtained from the reaction of two moles of an aldehyde or ketone with a triamine having two primary and one secondary amine groups, such as diethylene triamine, will have an unreacted secondary amine group which could be subsequently reacted with a mono and/or polyepoxide, or a mono or polyisocyanate to produce the imine functional adduct. One especially preferred commercial imine having an additional reactive group is Shell Epicure 3501 which is the reaction product of diethylene triamine and methyl isobutyl ketone. Examples of isocyanates which may be useful for reaction with the hydroxyl or amine group of the imine are included below in Section 6. Examples of epoxides which may be reacted with unreacted amine groups in the imine are included above in Section 4.

6. Isocyanate Compounds.

Isocyanate crosslinking material may be selected from isocyanate-functional materials that are well known in the art and include mono-, di-, tri- and multi- functional isocyanates as well as polyisocyanates that utilize di-, tri-, and multi- functional isocyanate material.

In one useful embodiment, polyisocyanates in compositions for use in the present invention have an average of at least two isocyanates per molecule. Representative polyisocyanates useful in the present invention include the aliphatic compounds such as ethylene, trimethylene, tetramethylene, pentamethylene, hexamethylene, 1,2-propylene, 1,2-butylene, 2,3-butylene, 1,3-butylene, ethylidene and butylidene diisocyanates; the cycloalkylene compounds such as 3-isocyanatomethyl-3,5,5-trimethylcyclohexylisocyanate, and the 1,3-cyclopentane, 1,3-cyclohexane, and 1,2-cyclohexane diisocyanates; the aromatic compounds such as m-phenylene, p-phenylene, 4,4-diphenyl, 1,5-naphthalene and 1,4-naphthalene diisocyanates; the aliphatic-aromatic compounds such as 4,4-diphenylene methane, 2,4- or 2,6-toluene or mixtures thereof, 4,4'-toluidine, and 1,4-xylylene diisocyanates; the nuclear substituted aromatic compounds such as dianisdine diisocyanate, 4,4'-diphenylether diisocyanate and chlorodiphenylene diisocyanate; the triisocyanates such as triphenyl methane-4,4',4"-triisocyanate, 1,3,5-triisocyanatebenzene and 2,4,6-triisocyanate toluene; and the tetraisocyanates such as 4,4'-diphenyl-dimethyl methane-2,2'5,5'-tetraisocyanate; the polymerized polyisocyanates such as dimers and trimers, and other various polyisocyanates containing biuret, urethane, and/or allophanate linkages. Polyisocyanates useful for primers in accordance with the present invention also include dimers and trimers of hexamethylene diisocyanate and mixtures thereof.

7. Carboxylic Acid Functional Compounds.

Acid-functional compounds which may be used in primer compositions in the method of the present invention comprise one or more carboxylic acid groups per molecule. In one useful embodiment, the acid-functional compounds comprise at least two carboxylic acid groups per molecule. Examples of suitable dicarboxylic acides include but are not limited to adipic acid, azeleic acid, fumaric acid, phthalic acid, sebacic acid, maleic acid, succinic acid, isophthalic acid, tetrahydrophthalic acid, hexahydrophthalic acid, dimmer fatty acids, itaconic acid, glutaric acid, cyclohexanedicarboxylic acid, and mixtures thereof. In addition, polymeric acid-functional compounds as discussed below may also be used.

In one embodiment, an acid-functional polymer used in a primer prepared for use in the present invention has a number average molecular weight of at least about 400. Typical number average molecular weights of useful carboxylic acid-functional polymers will range from about 500 to about 30,000. Representative acid-functional polymers include acrylics, polyesters and polymers prepared by the reaction of anhydrides with hydroxy-functional polymers as discussed in Section 2 above. The preparation of carboxylic acid-functional polymers by the half-ester forming reaction of anhydrides and hydroxy-functional polymers is discussed more fully in U.S. Patent No. 5,697,742 to Valpey III, et al., which is assigned to the assignee of the present application.

Other useful acid-functional polymers can be conveniently prepared by the free radical addition polymerization of unsaturated acids such as maleic acid, acrylic acid, methacrylic acid, crotonic acid, etc. along with one or more unsaturated monomers. Representative monomers include the esters of unsaturated acids, vinyl compounds, styrene-based materials, allyl compounds and other copolymerizable monomers as representatively taught in Section 2.5 of this specification. The monomers which are copolymerized with the unsaturated acid should be free of any functionality which could react with the acid groups during the polymerization.

Additional useful acid-functional polymers include polyester polymers obtained from the reaction of one or more aromatic and/or aliphatic carboxylic acids or their anhydrides and one or more aliphatic and/or aromatic polyols wherein the acid functionality is present in a stoichiometric excess over the hydroxy functionality. Representative carboxylic acids and polyols include those listed in Section 2.2 of this specification.

8. Amine-Functional Compounds.

Polyamines are also useful as active hydrogen-containing compounds and can be prepared by methods well known in the art such as by the free radical polymerization of acrylic or other unsaturated monomers having primary or secondary amine functionality, or by the reaction of amines having at least two amine groups per molecule with a polycarboxylic acid to form polyamide amines, or by the reaction of primary amines with epoxy materials to produce secondary amine and hydroxyl functionality. The polyamines can be polymeric, typically having a number average molecular weight over about 400, or lower molecular materials, such as piperazine, tetraethylenepentamine, 1,2-diaminopropane, etc. Also useful are the materials having a primary or secondary amine group and a hydroxyl group such as isopropanol amine, isobutanol amine, ethanol amine, etc. Amine groups are known to react with acetoacetoxy functional compounds, isocyanates and amines. Any amines known to react with any functional groups to form a coating film may be used in coatings in connection with the present invention. For example, the polyamines listed in connection with the formation of an imine in Section 5 may also be useful as a reactant in the formation of a primer coating of the present invention. Other useful amines include tricyclodecanedimethaneamine and the polyprimary amine functional phenols such as Cardolite NC559 from Cardolite, Inc. Useful amine-functional materials may also include aspartic acid esters.

9. Anhydride-Functional Compounds.

Anhydride-functional compounds may also be useful to form primers for use in the present invention. In one embodiment, the anhydride-functional compound can be any aliphatic or aromatic compound having one or more carboxylic acid anhydride groups in the molecule. In another useful embodiment, the anhydride-functional compound comprises one or more cyclic carboxylic acid anhydride groups in the molecule. In one other useful embodiment, the anhydride-functional compound comprises at least two cyclic carboxylic anhydride groups per molecule. Polymeric anhydrides having number average molecular weights between about 500 and about 7,000 are also useful.

In one embodiment, free radical addition polymers, such as acrylic polymers, having anhydride functionality are used in primers in connection with the present invention. These polymers are conveniently prepared as is well known in the art by the polymerization under free radical addition polymerization conditions of at least one unsaturated monomer having anhydride functionality, such as maleic anhydride, citraconic anhydride, itaconic anhydride, propenyl succinic anhydride, etc. optionally with other ethylenically unsaturated monomers such as the esters of unsaturated acids, vinyl compounds, styrene-based materials, allyl compounds and other copolymerizable monomers, all as representatively taught in Section 2.5 of this specification. The monomers which are copolymerized with the unsaturated anhydride should, of course, be free of any functionality which could react with the anhydride group during the polymerization. The anhydride-functional polymers can be conveniently prepared by conventional free radical addition polymerization techniques. Typically the polymerization will be conducted in an inert solvent and in the presence of a catalyst at temperatures ranging from about 35°C to about 200°C. In one useful embodiment, the anhydride-functional polymers should comprise at least 5% by weight of the anhydride.

Other polyanhydrides, in addition to the acrylic polymeric anhydrides prepared by a free radical addition process, can also be utilized in the practice of this invention. Ester anhydrides can be prepared, as is known in the art, by the reaction of e.g. trimellitic anhydride with polyols. Other representative, suitable polyanhydrides include poly-functional cyclic dianhydrides such as cyclopentane tetracarboxylic acid dianhydride, diphenyl-ether tetracarboxylic acid dianhydride, 1,2,3,4,-butane tetracarboxylic acid dianhydride, and the benzophenone tetracarboxylic dianhydrides such as 3,3',4,4'-benzophenone tetracarboxylic dianhydride, and 2,bromo-3,3',4,4'-benzophenone tetracarboxylic acid dianhydride. Trianhydrides such as the benzene and cyclohexene hexacarboxylic acid trianhydrides are also useful. Additionally, useful polyanhydrides can be prepared by the maleinization of polyunsaturated compounds such as unsaturated rubbers, unsaturated oils and unsaturated hydrocarbons.

Reactions among various combinations of the functional groups disclosed above and other functional groups to form coating compositions are well known in the art. Any workable combinations of such functional groups may be used to form coatings for use in connection with the method of the present invention. In addition, various two-component coating compositions that may be useful in connection with the present invention are disclosed in the prior art. Representative coating compositions and methods of making coatings include but are not limited to those disclosed in U.S. Pat. No. 6,828,405; 6,344,502; 6,297,320; 6,235,846; 5,679,742; 5,633,091; 5,618,884; 5,591,805; 5,589,560; 5,580,926; 5,411,809; 5,517,100; 4,946,744; and 4,362,770 which are assigned to the assignee of the present application. Other examples include U.S. Pat. Nos. 6,599,965; 6,365,699; 6,534,121; and 6,656,530. Also, coating compositions prepared by Michael addition reactions are taught in U.S. Pat. No. 3,668,183; 4,408,018; and 4,786,682. It should be understood that the functional groups and examples thereof presented herein are examples only and are not intended to be an exhaustive list of all potential materials that may be used in primer compositions used in connection with the present invention. Variations known to those skilled in the art should be understood to be included within the scope of the present invention.

The primers used in connection with the present invention can be cured at temperatures ranging from about room temperature up to about 177°C (350°F). The drying may be accelerated by force drying or by using short wave infrared radiation.

The coatings may contain pigments as are well known in the art. Representative opacifying pigments include white pigments, such as titanium dioxide, zinc oxide, antimony oxide, etc., and organic or inorganic chromatic pigments such as iron oxide, carbon black, phthalocyanine blue etc. The coatings may also contain extender pigments such as calcium carbonate, clay, silica, talc, etc.

The coatings may also contain other additives such as flow agents, catalysts, diluents, solvents, adhesion promoters, ultraviolet light absorbers etc.

In one useful embodiment, the primer composition comprises about 20 to about 26% based on the total weight of the solution of a solvent. Suitable solvents include aromatics, naphthas, acetates, ethers, esters, ketones, ether esters and mixtures thereof. Useful solvents include, but are not limited to acetone, methyl ethyl ketone, methyl propyl ketone, methyl isobutyl ketone, methyl n-amyl ketone, C-11 ketone, cyclohexanone, diisobutyl ketone, and methyl isoamyl ketone, as well as methyl acetate, ethyl acetate, n-propyl acetate, isopropyl acetate, n-butyl acetate, isobutyl acetate, 2-ethylhexyl acetate, n-butyl propionate, n-pentyl propionate, ethyl 3-ethoxypropoinate, propylene glycol methyl ether acetate, dipropylene glycol methyl ether acetate, ethylene glycol butyl ether acetate, diethylene glycol butyl ether acetate, toluene, xylene, aromatic 100, aromatic 150, aromatic 200, and parachlorobenzotrifluoride. In one useful embodiment, a solvent capable of evaporating quickly after the primer is applied to the substrate is used.

Two-component coating systems generally include a catalyst for the reaction of the film-forming polymer functional group and the crosslinker functional group. Appropriate catalysts for the various reactions are known in the art. Examples of catalysts include but are not limited to tertiary amines and secondary amines, such as N-methylimidazole, N-ethyl morpholine, triethylamine, and ethyl imidazole; ammonium salts; nucleophilic catalysts, such as lithium iodide; phosphonium salts and phosphines such as triphenyl phosphine; electrophillic catalysts such as tin metal salts or complexes; organometallic catalysts such as dibutyl tin dilaurate, zinc octoate, copper naphthenate, phenyl mercuric propionate, lead naphthenate; anhydrides such as succinic anhydride, acetic anhydride, maleic anhydride, tetrahydrophthalic anhydride, hexahydrophthalic anhydride and anhydride functional polymers; and acids such as benzoic acid and isostearic acid. The catalyst will typically be present at a level of at least 0.01% of the weight of the reactants.

An adhesion promoter may also be included in the primer composition. In one useful embodiment, the adhesion promoter is an organosiliane compound such as an amine silane or an epoxy silane. Representative organosilanes are taught in Silane Coupling Agents, by E.P. Pluddemann (Plenum Press, New York 1982). Specific useful silanes include 3-mercaptopropyltrimethoxysilane, 3-aminopropyltrimethoxysilane and 3-glycidoxylpropyltrimethoxysilane.

Since the primer compositions used in connection with the method of the present invention are provided as multi-package systems which must be mixed together prior to use, the pigments, catalysts and other additives can be conveniently added to any or all of the appropriate individual packages. Due to the potential for hydrolysis of some potential reactive groups, in some embodiments, the primer compositions may be nonaqueous systems.

In one embodiment of the present invention, a two-component primer is formulated such that its viscosity is about 115 to about 130 KU (Stormer viscosity) or about 2500 to about 4000 cp (centipoises) (Brookfield viscosity) with a solids content of at least about 70%. In one useful embodiment, the solids content is about 74% to about 80%. In another useful embodiment, the solids content is at least about 80%. Although the primer composition used in the present invention can be utilized at a relatively high viscosity, it should not be confused with body putties or body filler compositions. Such compositions typically consist of a paste-like mixture of a polyester resin and talc that are used in the repair of metal surfaces. Body fillers generally include a peroxide catalysts for the cure reaction. In addition, polyester body fillers generally require the application of a primer over the body filler to promote adhesion and provide the desired appearance of additional coating layers. A primer-surfacer as taught herein for use with the present method may be directly topcoated.

In one useful embodiment, the primer composition used in accordance with the present invention is a multi-component curable composition comprising (a) an acrylic polymer having acetoacetoxy functionality and (b) a crosslinking component comprising at least one imine functional compound. The curable composition is reactive upon admixing of components (a) and (b). In one such embodiment, the imine functional compound may have an average of at least two imine groups per molecule which are reactive with the acetoacetoxy functionality.

Once commercially available primer that can be used in the process of the present invention is ULTRA-FILL HS Direct to Metal ISO-Free Primer NP75 available from the assignee of the present invention.

As stated above, the film-forming component and hardener component of the primer for use in the present invention must usually be mixed just before the primer is applied to the repaired substrate. Such mixing may be accomplished by measuring an appropriate amount of each component into a vessel and stirring. Additional components such as solvents, diluents, catalysts or other additives could also optionally be added at that time. Typically, the crosslinking agent will be present at an amount useful to provide a degree of reaction sufficient to obtain the desired level of cure, hardness, and performance properties. When the mixing is carried out in a vessel, the mixed primer composition may be transferred to a pad, a painters pallet, or other similar flat surface so that it may be applied to the substrate with a squeegee.

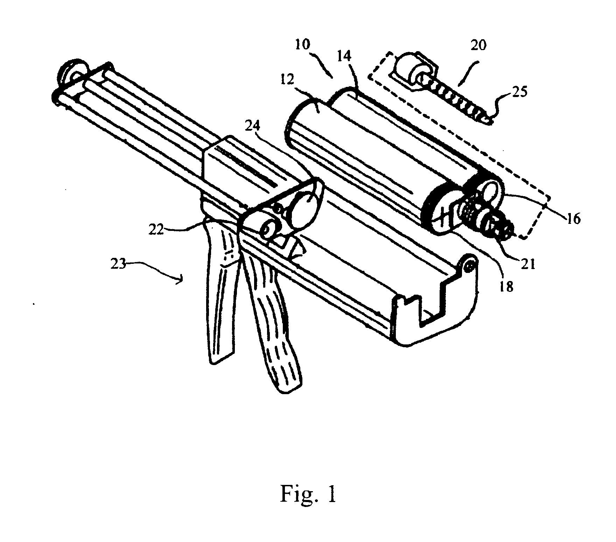

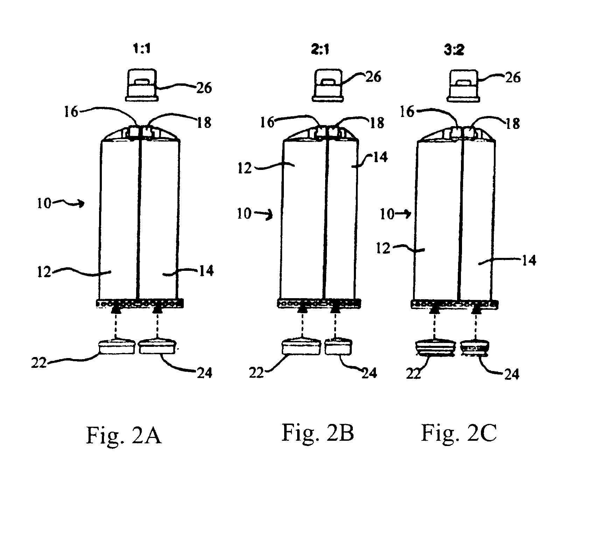

Mixing may also be accomplished though use of a two-component cartridge applicator 10 as shown in Figures 1 and 2A-2C. Various two-component cartridge applicators are known in the art. Such applicators are disclosed in U.S. Pat. Nos. 6,484,904; 5,875,928; 5,535,922; 5,249,709; and 4,538,920, which are incorporated herein by reference. A two-component cartridge applicator comprises two barrels 12 and 14 each equipped with an outlet end 16, 18. The barrels are sized and the cartridges are configured such that the proper mix ratio of the two-component coatings are dispensed and mixed. Examples of cartridges for various mix ratios are shown in FIGS. 2A-2C. Cartridges for other mix ratios are also within the scope of the present invention. A static mixing element 20 is positioned at the outlet end. The cartridge may be positioned in a caulk gun-type applicator 23 that is adapted to receive such cartridges or any other known applicator for dispensing materials from such cartridges. The materials contained in the barrels are dispensed and mixed by pushing the plungers 22, 24 into the barrels, thereby forcing the components of the primer composition from the barrels 12, 14 into the static mixing element 20, where the components are intermixed with one another, and out the open end 25 of the static mixer. When it is contemplated that the contents of the cartridges will not be completely consumed in one use, the static mixing element may be detached from the outlets and disposed of after each use. In such applications, several detachable and disposable static mixing elements ordinarily are included with each syringe. After a quantity of the curable coating has been dispensed and mixed from the barrels, the used static mixing element may be detached from the outlets and be discarded and a new static mixing element fitted to the outlets. In an alternative embodiment, the used static mixer may remain attached to the cartridge dispenser. In such an embodiment, the paint in the static mixer will cure and form a tight seal to prevent further mixing of the components in the barrels of the cartridge. In addition, a cap 26 may optionally be provided to prevent drying, evaporation or other reaction of the cartridge contents between uses. Various cartridge applicators and static mixing devices are commercially available including MIXPAC® cartridges and STATOMIX® applicators available from ConProTec, Inc. Other cartridge applicators and static mixing devices are available from Adhesive Packaging Specialties, Inc., TAH Industries, Inc. and 3M. When mixing is carried out using a two-component cartridge and static mixer, the primer composition may be applied directly to the substrate or may be applied to a pad or other surface for application with the squeegee at the painter's most convenient option. It should be understood that other configurations of multiple-component dispensing cartridges other that that described above may be used in connection with the present invention.

In a two-component curable primer system, one barrel contains the film forming polymer component and the other barrel includes the crosslinker that is reactive with the functionality of the film forming polymer component. Additional components such as solvents, diluents, catalysts or other additives could optionally be included in either barrel of the multi-component cartridge with either component of the primer system.

Once mixed, the primer is spread onto the sanded area using a squeegee. As used herein "squeegee" refers to any implement having at least one flat edge that is capable of spreading a coating composition on a surface. Such implements are generally known in the automotive industry and are used for applying known body filler putties. The squeegee may be formed of rubber, plastic, stainless steel or other metals. In one useful embodiment, the squeegee is a rectangular piece of flexible rubber that is approximately 3.2 mm (1/8 inch) thick. Various implements that may be used as a squeegee in the present invention are commercially available. One such squeegee applicator is sold as under the MARTIN SENOUR PAINTS trademark by NAPA (e.g. Model #2801). Other useful applicators include EVERCOAT Professional Spreaders available from Fibre Glass Evercoat Co., Inc. (e.g. Model #380), and WETORDRY rubber squeegees available from 3M (e.g. Model #s 05517 and 05518).

A first foundation coat of the primer may be spread over the sanded area using a squeegee. The coating of primer should be tapered beyond the damage area into the featheredged margins of the existing coating. The primer should typically be applied by pulling the squeegee applicator across the repair surface in parallel, overlapping lines. After the first coat has been applied, a short flash time may be allowed before a second coat is applied. In one embodiment, a flash time of about 5 to about 10 minutes may be sufficient. If needed to achieve the desired film build, a second coat of primer may be applied over the foundation coat. The second coat may be applied in an identical fashion to the first coat, or it may be applied in a direction generally perpendicular to the lines of the first coat. If third or subsequent coats are required, each additional coat may then be applied generally perpendicular to the previous coat.

In some instances, application of the primer composition using the squeegee applicator leaves "tool marks" or lines in the primer coating composition from the application process. In one embodiment of the present invention, one may optionally dampen a cloth with a solvent and gently wipe the primer coating to remove or minimize any tool marks from the primer coating application.

Spreading the primer coating with a squeegee applicator allows the primer to be pushed into the sand scratches to fill any voids and to avoid any pinholes, which may cause unwanted blistering of the finished coating. Ins some cases, the primers applied by the method of the present invention may replace the use of body fillers.

Once the primer composition has been applied to the desired film thickness, it should be allowed to cure to a hardness that will allow the primer coating to be sanded. Most commercially available primers include instructions regarding the appropriate cure time necessary prior to sanding. The primer may be allowed to air dry, may be forced dry, or may be dried using UV infrared light

After an appropriate cure time, the cured primer coating may be sanded prior to applying subsequent coating layers, basecoat or clearcoat, or other topcoat layers. In one useful embodiment, the cured primer coating layer is sanded using a block or hand sander and a grade of sandpaper appropriate for the next coating layer to be applied. For example, if an additional basecoat or sealing layer is to be applied over a primer, P400 or equivalent grit sandpaper may be used If a topcoat is to be directly applied to the primer, P600 or equivalent grit sandpaper may be used.

After sanding, the surface may be cleaned again to remove any excess dust or other contaminants. Any desired subsequent coating layers may then be applied. Usually, in automotive applications, a basecoat/clearcoat combination is utilized to blend the refinished area with the existing finish.

## Claims

1. A method for refinishing a damaged area of a substrate, wherein the damaged area is surrounded by an existing finish, the method comprising:
preparing a damaged area for refinishing;
providing a multi-component coating composition wherein the components are reactive upon mixing, said coating comprising
(i) a first component comprising a film forming polymer having at least one functional group; and
(ii) a second component comprising a crosslinker, wherein said crosslinker comprises at least one functional group reactive with the at least one functional group of the film forming polymer in a crosslinking reaction;
mixing the first component and the second component of the multi-component coating composition; and
spreading the mixed multi-component coating composition onto the prepared damaged area to form a coating layer on the substrate;
**characterized by**
the mixing step being carried out by:
(i) providing a two-component cartridge applicator comprising a first barrel (12), a second barrel (14), and a static mixer (20), wherein the first component is housed in the first barrel (12) and the second component is housed in the second barrel (14);
and
(ii) dispensing the first component out of the first barrel (12) and the second component out of the second barrel (14) into the static mixer (20); and
the spreading step being carried out by using a squeegee applicator.

2. The method of claim 1 wherein the at least one functional group of the film forming polymer is at least one acetoacetoxy-functional group.

3. The method of claim 1 wherein the at least one functional group of the crosslinker is an imine functional group.

4. The method of claim 1 wherein the multi-component coating composition has a viscosity of 115 to 130 KU at a solids content of at least 70%.

5. The method of claim 1 wherein the multi-component coating composition has a viscosity of 115 to 130 KU at a solids content of at least 80%.

6. The method of claim 1 wherein repairing the damaged area for refinishing comprises the steps of: sanding the damaged area.

7. The method of claim 6 wherein repairing the damaged area for refinishing further comprises:
featheredging the existing finish surrounding the damaged area.

8. The method of claim 1 further comprising: applying a topcoat over the coating layer.

9. The method of claim 1 further comprising: providing a cloth dampened with solvent; and wiping any tool marks from the coating layer with the cloth.

10. The method of claim 1, wherein a first component comprises a first functional group and a second component comprises a second functional group, and wherein said first and second functional groups are selected from active-hydrogen, isocyanate, epoxide, carboxylic acid, hydroxyl, amine, imine, acetoacetoxy, and anhydrides; and spreading said two-component curable primer composition onto the substrate using a squeegee to form a coating layer.

11. The method of claim 10 further comprising: sanding the substrate prior to spreading said two-component curable primer onto the substrate.

12. The method of claim 10 further comprising: allowing the coating layer to cure at least long enough to allow it to be sanded; sanding the cured coating layer; applying a topcoat over the cured and sanded coating layer.

13. The method of claim 10 wherein the two-component curable primer composition has a viscosity of 115 to 130 KU at a solids content of at least 70%.

14. The method of claim 1, the method further comprising:
providing a multi-component curable primer composition having a viscosity of 115 to 130 KU at a solids content of at least 74%;
spreading the multi-component curable primer composition onto the prepared damaged area using a squeegee applicator to form a primer coating layer; applying a topcoat directly over the primer coating layer.

15. The method of claim 14 wherein the multi-component curable primer composition comprises an acetoacetoxy acrylate film-forming polymer and a ketimine crosslinker.

16. The method of claim 1 wherein a damaged area of a vehicle is to be refinish, the method further comprising:
spreading a two-component, non-free radical, non-peroxide curing primer coating composition onto the prepared area using a squeegee to form a primer coating layer;
curing said coating layer at least long enough to allow the coating layer to be sanded; and
applying a topcoat directly over said primer coating layer.

17. The method of claim 16 wherein the two-component, non-free radical, non-peroxide curing primer coating composition comprises functional groups selected from active-hydrogen and isocyanate, epoxide and carboxylic acid, hydroxyl and carboxylic acid, epoxide and amine, imine and isocyanate, epoxide and amine, acetoacetoxy and amine, acetoacetoxy and imine, hydroxyl and anhydride, and epoxide and anhydride.

18. The method of claim 16 wherein the two-component, non-free radical, non-peroxide curing primer coating composition is formed by Michael addition polymerization between groups selected from acrylates and amines, acetoacetoxy- functional polymers and acrylates, acetoacetoxy-functional polymers and ketimines, and acetoacetoxy-functional polymers and aldimines.

19. The method of claim 1, the method further comprising:
cleaning the damaged area of the substrate and the surrounding existing finish using one or more cleaners selected from the group consisting of detergents, water and solvents;
sanding the damaged area; featheredging a portion of the existing finish surrounding the damaged area;
providing a two-component primer comprising
(i) a first component comprising a film forming polymer having at least one functional group; and
(ii) a second component comprising a crosslinker, wherein said crosslinker comprises at least one functional group reactive with the at least one functional group of the film forming polymer in a crosslinking reaction;
mixing the first component and second component together;
spreading the mixed first and second components onto the sanded damaged area using a squeegee to form a coating layer;
tapering the coating layer onto the featheredged portion of the existing finish;
curing the coating layer at least long enough to allow the coating layer to be sanded;
sanding the cured coating layer; and
applying a topcoat directly over said sanded cured coating layer.

## Patentansprüche

1. Verfahren zur Neulackierung eines beschädigten Bereichs eines Substrats, wobei der beschädigte Bereich von einem vorhandenen Lack umgeben wird, wobei das Verfahren umfasst:
Vorbereiten eines beschädigten Bereichs zur Neulackierung;
Bereitstellen einer Mehrkomponenten-Beschichtungszusammensetzung, wobei die Komponenten nach Mischen reaktiv sind, wobei die Beschichtung umfasst
(i) eine erste Komponente, die ein filmbildendes Polymer umfasst, das mindestens eine funktionelle Gruppe aufweist; und
(ii) eine zweite Komponente, die einen Vernetzer umfasst, wobei der Vernetzer mindestens eine funktionelle Gruppe umfasst, die mit der mindestens einen funktionellen Gruppe des filmbildenden Polymers in einer Vernetzungsreaktion reaktiv ist;
Mischen der ersten Komponente und der zweiten Komponente der Mehrkomponenten-Beschichtungszusammensetzung; und
Verteilen der gemischten Mehrkomponenten-Beschichtungszusammensetzung auf dem vorbereiteten beschädigten Bereich, um eine Beschichtungslage auf dem Substrat zu bilden;
**dadurch gekennzeichnet, dass**
der Mischschritt durchgeführt wird durch:
(i) Bereitstellen eines Zweikomponenten-Patronenauftraggeräts, das einen ersten Zylinderkörper (12), einen zweiten Zylinderkörper (14) und einen statischen Mischer (20) umfasst, wobei die erste Komponente in dem ersten Zylinderkörper (12) untergebracht ist und die zweite Komponente in dem zweiten Zylinderkörper (14) untergebracht ist; und
(ii) Abgeben der ersten Komponente aus dem ersten Zylinderkörper (12) und der zweiten Komponente aus dem zweiten Zylinderkörper (14) in den statischen Mischer (20); und
wobei der Verteilungsschritt unter Verwendung eines Spachtelauftraggeräts durchgeführt wird.

2. Verfahren nach Anspruch 1, bei dem die mindestens eine funktionelle Gruppe des filmbildenden Polymers mindestens eine Acetoacetoxy-funktionelle Gruppe ist.

3. Verfahren nach Anspruch 1, bei dem die mindestens eine funktionelle Gruppe des Vernetzers eine Imin-funktionelle Gruppe ist.

4. Verfahren nach Anspruch 1, bei dem die Mehrkomponenten-Beschichtungszusammensetzung eine viskosität von 115 bis 130 KU bei einem Festkörpergehalt von mindestens 70% aufweist.

5. Verfahren nach Anspruch 1, bei dem die Mehrkomponenten-Beschichtungszusammensetzung eine Viskosität von 115 bis 130 KU bei einem Festkörpergehalt von mindestens 80% aufweist.

6. Verfahren nach Anspruch 1, bei dem ein Ausbessern des beschädigten Bereichs zur Neulackierung die Schritte umfasst: Bearbeiten des beschädigten Bereichs mit Sandpapier.

7. Verfahren nach Anspruch 6, bei dem ein Ausbessern des beschädigten Bereichs zur Neulackierung weiter umfasst:
Verschleifen der Übergänge des vorhandenen Lacks, der den beschädigten Bereich umgibt.

8. Verfahren nach Anspruch 1, weiter umfassend: Auftragen einer Deckschicht über der Beschichtungslage.

9. Verfahren nach Anspruch 1, weiter umfassend: Bereitstellen eines Tuchs, das mit Lösungsmittel benetzt ist; und Abwischen jeglicher Werkzeugspuren von der Beschichtungslage mit dem Tuch.

10. Verfahren nach Anspruch 1, bei dem eine erste Komponente eine erste funktionelle Gruppe umfasst und eine zweite Komponente eine zweite funktionelle Gruppe umfasst, und bei dem die erste und zweite funktionelle Gruppe ausgewählt sind aus: aktivem Wasserstoff, Isocyanat, Epoxid, Carbonsäure, Hydroxyl, Amin, Imin, Acetoacetoxy und Anhydriden; und Verteilen der härtbaren Zweikomponenten-Grundiermittelzusammensetzung auf dem Substrat unter Verwendung eines Spachtels, um die Beschichtungslage zu bilden.

11. Verfahren nach Anspruch 10, weiter umfassend: Bearbeiten des Substrats mit Sandpapier vor einem Verteilen des härtbaren Zweikomponenten-Grundiermittels auf dem Substrat.

12. Verfahren nach Anspruch 10, weiter umfassend: mindestens ausreichend langes Härten der Beschichtungslage, um zu ermöglichen, dass sie mit Sandpapier bearbeitet wird; Bearbeiten der gehärteten Beschichtungslage mit Sandpapier; Auftragen einer Deckschicht über der gehärteten und mit Sandpapier bearbeiteten Beschichtungslage.

13. Verfahren nach Anspruch 10, bei dem die härtbare Zweikomponenten-Grundiermittelzusammensetzung eine Viskosität von 115 bis 130 KU bei einem Festkörpergehalt von mindestens 70% aufweist.

14. Verfahren nach Anspruch 1, wobei das Verfahren weiter umfasst:
Bereitstellen einer härtbaren Mehrkomponenten-Grundiermittelzusammensetzung mit einer Viskosität von 115 bis 130 KU bei einem Festkörpergehalt von mindestens 74%;
Verteilen der härtbaren Mehrkomponenten-Grundiermittelzusammensetzung auf dem vorbereiteten beschädigten Bereich unter Verwendung eines Spachtelauftraggeräts, um eine Grundiermittelbeschichtungslage zu bilden; Auftragen einer Deckschicht direkt über der Grundiermittelbeschichtungslage.

15. Verfahren nach Anspruch 14, bei dem die härtbare Mehrkomponenten-Grundiermittelzusammensetzung ein Acetoacetoxyacrylatfilm-bildendes Polymer und einen Ketiminvernetzer umfasst.

16. Verfahren nach Anspruch 1, bei dem ein beschädigter Bereich eines Fahrzeugs neu zu lackieren ist, wobei das Verfahren weiter umfasst:
Verteilen einer ohne freies Radikal, ohne Peroxid härtenden Zweikomponenten-Grundiermittel-Beschichtungszusammensetzung auf dem vorbereiteten Bereich unter Verwendung eines Spachtels, um eine Grundiermittelbeschichtungslage zu bilden;
mindestens ausreichend langes Härten der Beschichtungslage, um zu ermöglichen, dass die Beschichtungslage mit Sandpapier bearbeitet wird; und
Auftragen einer Deckschicht direkt über der Grundiermittelbeschichtungslage.

17. Verfahren nach Anspruch 16, bei dem die ohne freies Radikal, ohne Peroxid härtende Zweikomponenten-Grundiermittel-Beschichtungszusammensetzung funktionelle Gruppen umfasst, die ausgewählt sind aus: aktivem Wasserstoff und Isocyanat, Epoxid und Carbonsäure, Hydroxyl und Carbonsäure, Epoxid und Amin, Imin und Isocyanat, Epoxid und Amin, Acetoacetoxy und Amin, Acetoacetoxy und Imin, Hydroxyl und Anhydrid sowie Epoxid und Anhydrid.

18. Verfahren nach Anspruch 16, bei dem die ohne freies Radikal, ohne Peroxid härtende Zweikomponenten Grundiermittel-Beschichtungszusammensetzung durch Michael-Addition-Polymerisation zwischen Gruppen gebildet wird, die ausgewählt sind aus: Acrylaten und Aminen, Acetoacetoxy-funktionellen Polymeren und Acrylaten, Acetoacetoxy-funktionellen Polymeren und Ketiminen sowie Acetoacetoxy-funktionellen Polymeren und Aldiminen.

19. Verfahren nach Anspruch 1, wobei das Verfahren weiter umfasst:
Reinigen des beschädigten Bereichs des Substrats und des umgebenden vorhandenen Lacks unter Verwendung von einem oder mehreren Reinigungsmitteln, die ausgewählt sind aus der Gruppe, die aus Detergenzien, Wasser und Lösungsmitteln besteht;
Bearbeiten des beschädigten Bereichs mit Sandpapier; Verschleifen der Übergänge eines Teils des vorhandenen Lacks, der den beschädigten Bereich umgibt;
Bereitstellen eines Zweikomponenten-Grundiermittels, umfassend
(i) eine erste Komponente, die ein filmbildendes Polymer umfasst, das mindestens eine funktionelle Gruppe aufweist; und
(ii) eine zweite Komponente, die einen Vernetzer umfasst, wobei der Vernetzer mindestens eine funktionelle Gruppe umfasst, die mit der mindestens einen funktionellen Gruppe des filmbildenden Polymers in einer Vernetzungsreaktion reaktiv ist;
Zusammenmischen der ersten Komponente und der zweiten Komponente;
Verteilen der gemischten ersten und zweiten Komponente auf dem mit Sandpapier bearbeiteten beschädigten Bereich unter Verwendung eines Spachtels, um eine Beschichtungslage zu bilden;
konisches Zulaufenlassen der Beschichtungslage auf dem verschliffenen Teil des vorhandenen Lacks;
mindestens ausreichend langes Härten der Beschichtungslage, um zu ermöglichen, dass die Beschichtungslage mit Sandpapier bearbeitet wird;
Bearbeiten der gehärteten Beschichtungslage mit Sandpapier; und
Auftragen einer Deckschicht direkt über der mit Sandpapier bearbeiteten gehärteten Beschichtungslage.

## Revendications

1. Méthode de restauration d'une zone endommagée d'un substrat, où la zone endommagée est entourée par un fini existant, la méthode comprenant :
la préparation d'une zone endommagée en vue d'une restauration ;
la production d'une composition de revêtement à multi-composants, où les composants sont réactifs à la mise en mélange, ledit revêtement comprenant
(i) un premier composant comprenant un polymère filmogène ayant au moins un groupement fonctionnel ; et
(ii) un second composant comprenant un réticulant, où ledit réticulant comprend au moins un groupement fonctionnel capable de réagir avec le un au moins groupement fonctionnel du polymère filmogène lors d'une réaction de réticulation ;
le mélange du premier composant et du second composant de la composition de revêtement à multi-composants ; et
l'étalement de la composition de revêtement à multi-composants mélangés sur la zone endommagée préparée pour former une couche de revêtement sur le substrat ;
**caractérisée en ce que**
l'étape de mélange est effectuée par :
(i) la production d'un applicateur à cartouche à deux composants comprenant un premier barillet (12), un second barillet (14) et un mélangeur statique (20), où le premier composant est logé dans le premier barillet (12) et le second composant est logé dans le second barillet (14) ;
et
(ii) la distribution du premier composant en dehors du premier barillet (12) et du second composant en dehors du second barillet (14) dans le mélangeur statique (20) ;
et
l'étape d'étalement étant effectuée au moyen d'un applicateur à raclette.

2. Méthode de la revendication 1, où le au moins un groupement fonctionnel du polymère filmogène est au moins un groupement fonctionnel acétoacétoxy.

3. Méthode de la revendication 1, où le au moins un groupement fonctionnel du réticulant est un groupement fonctionnel imine.

4. Méthode de la revendication 1, où la composition de revêtement à multi-composants a une viscosité comprise entre 115 et 130 KU à une teneur en solides d'au moins 70 %.

5. Méthode de la revendication 1, où la composition de revêtement à multi-composants a une viscosité comprise entre 115 et 130 KU à une teneur en solides d'au moins 80 %.

6. Méthode de la revendication 1, où la réparation de la zone endommagée en vue d'une restauration comprend les étapes de : ponçage de la zone endommagée.

7. Méthode de la revendication 6, où la réparation de la zone endommagée en vue d'une restauration comprend également :
le ponçage en biseau du fini existant entourant la zone endommagée.

8. Méthode de la revendication 1, qui comprend également : l'application d'une couche de finition sur la couche de revêtement.

9. Méthode de la revendication 1, qui comprend également : l'utilisation d'un chiffon humidifié avec un solvant ; et l'essuyage de la couche de revêtement avec le chiffon en vue d'éliminer tout trait d'outils.

10. Méthode de la revendication 1, où un premier composant comprend un premier groupement fonctionnel et un second composant comprend un second groupement fonctionnel, et où lesdits premier et second groupements fonctionnels sont sélectionnés parmi un hydrogène actif, un isocyanate, un époxyde, un acide carboxylique, un hydroxyle, une amine, une imine, un acétoacétoxy et des anhydrides ; et étalement de ladite composition d'apprêt durcissable à deux composants sur le substrat au moyen d'une raclette pour former une couche de revêtement.

11. Méthode de la revendication 10, qui comprend également : le ponçage du substrat avant l'étalement dudit apprêt durcissable à deux composants sur le substrat.

12. Méthode de la revendication 10, qui comprend également : l'étape consistant à laisser la couche de revêtement durcir au moins suffisamment longtemps pour qu'il soit possible de la poncer ; le ponçage de la couche de revêtement durcie ; l'application d'une couche de finition sur la couche de revêtement durcie et poncée.

13. Méthode de la revendication 10, où la composition d'apprêt durcissable à deux composants a une viscosité comprise entre 115 et 130 KU à une teneur en solides d'au moins 70 %.

14. Méthode de la revendication 1, la méthode comprenant également :
la production d'une composition d'apprêt durcissable à multi-composants ayant une viscosité comprise entre 115 et 130 KU à une teneur en solides d'au moins 74 % ;
l'étalement de la composition d'apprêt durcissable à multi-composants sur la zone endommagée préparée au moyen d'un applicateur à raclette pour former une couche de revêtement d'apprêt ; l'application d'une couche de finition directement sur la couche de revêtement d'apprêt.

15. Méthode de la revendication 14, où la composition d'apprêt durcissable à multi-composants comprend un polymère filmogène (acétoacétoxy)acrylate et un réticulant à base de cétimine.

16. Méthode de la revendication 1, où une zone endommagée d'un véhicule doit être restaurée, la méthode comprenant également :
l'étalement, sur la zone préparée, d'une composition de revêtement d'apprêt à deux composants durcissable sans radicaux libres ni peroxydes au moyen d'une raclette pour former une couche de revêtement d'apprêt ;
le durcissement de ladite couche de revêtement au moins suffisamment longtemps pour qu'il soit possible de la poncer ; et
l'application d'une couche de finition sur la couche de revêtement d'apprêt.

17. Méthode de la revendication 16, où la composition de revêtement d'apprêt à deux composants durcissable sans radicaux libres ni peroxydes comprend des groupements fonctionnels sélectionnés parmi un hydrogène actif et un isocyanate, un époxyde et un acide carboxylique, un hydroxyle et un acide carboxylique, un époxyde et une amine, une imine et un isocyanate, un époxyde et une amine, un acétoacétoxy et une amine, un acétoacétoxy et une imine, un hydroxyle et un anhydride et un époxyde et un anhydride.

18. Méthode de la revendication 16, où la composition de revêtement d'apprêt à deux composants durcissable sans radicaux libres ni peroxydes est formée par polymérisation par réaction d'addition de Michaël entre des groupements fonctionnels sélectionnés parmi des acrylates et amines, polymères à sites réactifs acétoacétoxy et acrylates, polymères à sites réactifs acétoacétoxy et cétimines et polymères à sites réactifs acétoacétoxy et aldimines.

19. Méthode de la revendication 1, la méthode comprenant également :
le nettoyage de la zone endommagée du substrat et du fini existant qui l'entoure en utilisant un ou plusieurs produits nettoyants sélectionnés dans le groupe consistant en des détergents, l'eau et des solvants ;
le ponçage de la zone endommagée ; le ponçage en biseau d'une portion du fini existant entourant la zone endommagée ;
la production d'un apprêt à deux composants comprenant
(i) un premier composant comprenant un polymère filmogène ayant au moins un groupement fonctionnel ; et
(ii) un second composant comprenant un réticulant, où ledit réticulant comprend au moins un groupement fonctionnel capable de réagir avec le un au moins groupement fonctionnel du polymère filmogène lors d'une réaction de réticulation ;
le mélange du premier composant avec le second composant ;
l'étalement des premier et second composants mélangés sur la zone endommagée poncée au moyen d'une raclette pour former une couche de revêtement ;
l'amincissement dégressif de la couche de revêtement sur la portion poncée en biseau du fini existant ;
le durcissement de la couche de revêtement au moins suffisamment longtemps pour qu'il soit possible de la poncer ;
le ponçage de la couche de revêtement durcie ; et
l'application d'une couche de finition sur la couche de revêtement d'apprêt durcie et poncée.
